# EUROPÄISCHE PATENTSCHRIFT

(11) **EP 3 219 581 B1**
(45) Veröffentlichungstag und Bekanntmachung des Hinweises auf die Patenterteilung: **18.03.2020**
(21) Anmeldenummer: 16167498.1
(22) Anmeldetag: 28.04.2016
(51) Int. Cl.: B62D 13/00, B62D 12/02

(54) **GELENKBUS ALS MEHRTEILIGES BERÄDERTES LANDFAHRZEUG SOWIE EIN VERFAHREN ZUR LENKUNG DES HINTERWAGENS EINES SOLCHEN GELENKBUSSES**
ARTICULATED BUS AS A MULTI-PART WHEELED LAND VEHICLE AND A METHOD FOR STEERING THE REAR CARRIAGE OF SUCH AN ARTICULATED BUS
AUTOBUS ARTICULE TEL QU'UN VEHICULE D'UN VEHICULE TERRESTRE ROULANT CONSTITUE DE PLUSIEURS PARTIES ET PROCEDE DE COMMANDE DE DIRECTION DE LA PARTIE ARRIERE D'UN TEL AUTOBUS ARTICULE

(30) Priorität: 18.03.2016 EP 16161086
(43) Veröffentlichungstag der Anmeldung: 20.09.2017
(73) Patentinhaber: Hübner GmbH & Co. KG, 34123 Kassel (DE)
(72) Erfinder: Wagner, Sebastian, 01159 Dresden (DE); Nitzsche, Gunter, 04229 Leipzig (DE)
(74) Vertreter: Patentanwälte Walther Hinz Bayer PartGmbB

(56) Entgegenhaltungen:
- EP-A1- 1 531 117
- US-A1- 2007 194 557

## Beschreibung

Die Erfindung betrifft gemäß dem Oberbegriff des Anspruches 1 einen Gelenkbus als mehrteiliges berädertes Landfahrzeug, wobei der Hinterwagen mit dem Vorderwagen durch ein Fahrzeuggelenk verbunden ist, sowie nach
Anspruch 10 ein Verfahren zur Lenkung eines Hinterwagens eines Gelenkbusses als mehrteiliges berädertes Landfahrzeug.

Aus der US 2007/0194557 A1 ist ein mehrteiliges berädertes Landfahrzeug bekannt, wobei Vorder- und Hinterwagen durch eine Abschleppstange miteinander verbunden sind. Diese Abschleppstange umfasst drei Teile, nämlich eine Kuppelstange und zwei winklig daran angeordnete Zugstangen, die gelenkig mit der Kuppelstange verbunden sind. Der Hinterwagen weist zwei Achsen auf, von denen eine lenkbar ist.

Dabei offenbart die US2007/0194557 A1 in Bezug auf den unabhängigen Anspruch 1 ein mehrteiliges, berädertes Landfahrzeug, wobei der Hinterwagen mit einem Vorderwagen gelenkig verbunden ist, wobei der Hinterwagen mit dem Vorderwagen durch ein Fahrzeuggelenk verbunden ist, wobei das Fahrzeuggelenk zwei Gelenksegmente umfasst, die durch ein Drehlager schwenkbar miteinander verbunden sind, wobei der Hinterwagen mindestens zwei Achsen aufweist, wobei der Hinterwagen eine Lenkung aufweist und wobei zumindest die Räder der vorderen Achse des Hinterwagens lenkbar ausgebildet sind. In Bezug auf den unabhängigen Anspruch 10 offenbart die US2007/0194557 A1 ein Verfahren zur Lenkung eines Hinterwagens eines mehrteiligen, beräderten Landfahrzeuges, wobei der Hinterwagen mit dem Vorderwagen verbunden ist, wobei der Hinterwagen mindestens zwei Achsen aufweist, wobei der Vorderwagen mindestens eine Achse mit lenkbaren Rädern aufweist, wobei zumindest die Räder der vorderen Achse des Hinterwagens lenkbar ausgebildet sind und wobei das Verfahren folgende Schritte umfasst: - Berechnung des Lenkausschlagwinkels der Räder der vorderen Achse des Hinterwagens auf der Grundlage des Winkels zwischen Vorder- und Hinterwagen und/oder der Winkelstellung der Räder mindestens einer lenkbaren Achse des Vorderwagens und/oder der Winkelstellung der Räder einer Hinterachse des Hinterwagens; - Einstellung des Lenkausschlagwinkels der Räder der vorderen Achse des Hinterwagens auf der Grundlage des berechneten Lenkausschlagwinkels.

Aus der EP 1 531 117 A1 ist ein Zugfahrzeug mit einem doppelachsigen Anhänger bekannt, wobei das Zugfahrzeug und der Anhänger durch eine Kreuzgelenk miteinander verbunden sind. Das Kreuzgelenk umfasst zwei kreuzweise angeordnete Arme, die endseitig jeweils gelenkig am Zugfahrzeug oder Anhänger angeordnet sind.

Gelenkbusse sind aus dem Stand der Technik als mehrteilige beräderte Landfahrzeuge hinreichend bekannt. Hierbei umfasst der Vorderwagen zwei beabstandet zueinander angeordnete Achsen, wobei der Hinterwagen am hinteren Ende eine Achse aufweist, wobei der Hinterwagen mit dem Vorderwagen gelenkig verbunden ist. Zwischen dem Vorderwagen und dem Hinterwagen befindet sich ein Übergang, der ein Hinüberwechseln von Personen von dem einen Fahrzeugteil in das andere Fahrzeugteil ermöglicht.

Bei den zuvor beschriebenen Gelenkbussen unterscheidet man zwischen Puller- und Pusherfahrzeugen; bei den Pullerfahrzeugen ist üblicherweise die letzte Achse des Vorderwagens angetrieben, wohingegen bei Pusherfahrzeugen die Achse des Hinterwagens angetrieben ist.

Zur Erhöhung der Transportkapazität derartiger Gelenkbusse ist beabsichtigt, nicht nur zweiteilige Fahrzeuge herzustellen, so wie sie aus dem Stand der Technik bekannt sind, sondern drei oder weitere Fahrzeugteile zu einem Gelenkbuszug zusammenzustellen. Auch ist angedacht, die Transportkapazität von zweiteiligen Fahrzeugen dadurch zu erhöhen, dass der Hinterwagen im Zuge einer längeren Bauweise über zwei oder mehr Achsen verfügt. Denkbar sind auch Kombinationen derartiger mehrachsiger Hänger als Hinterwagen zur Kupplung ganzer Gelenkbuszüge.

Bereits bei einem zweiachsigen Hinterwagen eines mehrteiligen, beräderten Landfahrzeugs müssen, um dem Hinterwagen zu ermöglichen, dem Vorderwagen bei Kurvenfahrt dem entsprechenden Verlauf der Kurve zu folgen, die Räder der vorderen Achse lenkbar ausgebildet sein. Der Lenkausschlagwinkel der Räder der vorderen Achse des Hinterwagens wird hierbei üblicherweise durch den Lenkausschlagwinkel mindestens einer lenkbaren Achse des Vorderwagens und/oder dem Winkel zwischen Vorderwagen und Hinterwagen und/oder dem Lenkwinkel der Hinterachse des Hinterwagens vorgegeben. Der Lenkausschlagwinkel, der der lenkbaren Achse des Hinterwagens durch den Vorderwagen vorgegeben wird, ist theoretisch so bemessen, dass die beiden Fahrzeugteile, also Vorderwagen und Hinterwagen, keinen Querkräften ausgesetzt sind. Das heißt, es sollten im Idealfall keine Kräfte an dem Landfahrzeug angreifen, die beispielsweise dazu führen, dass die Chassis verspannt werden bzw. dass beispielsweise der Hinterwagen bei Kurvenfahrt auf dem Boden querversetzt, was den Reifenverschleiß fördert bzw. die Fahrbahn schädigen kann.

Tatsächlich hat sich allerdings herausgestellt, dass das Fahrzeug durchaus Querkräften ausgesetzt ist, die zu entsprechenden Verschiebungen bzw. Momenten im Bereich der gelenkigen Verbindung zwischen den beiden Fahrzeugteilen, also zwischen Vorderwagen und Hinterwagen führen können. Dies gilt z. B. dann, wenn der tatsächliche Lenkausschlagwinkel der Räder der vorderen Achse des Hinterwagens von dem Sollwert abweicht, der von dem Vorderwagen vorgegeben ist. Die Folge hiervon kann sein, dass bei entsprechendem Untergrund, die Fahrzeugteile auf dem Untergrund seitlich versetzen. Aufgrund der großen Steifigkeit von Reifen und Karosserie führen bereits kleinere Winkelfehler zu großen Querkräften und Verspannungen.

Ursächlich dafür, dass der aktuelle Lenkausschlagwinkel des Hinterwagens nicht mit dem durch die lenkbare Achse des Vorderwagens vorgegebenen Sollwert übereinstimmt, können verschiedene Einflussfaktoren sein. So kann beispielsweise die Achsschenkellenkung aufgrund von z. B. Verschleiß gewisse Toleranzen aufweisen, die durchaus noch im Normbereich liegen. Auch ist nicht immer gewährleistet, dass die Achsen der Fahrzeuge absolut genau an den hierfür vorgesehenen Punkten des jeweiligen Chassis angeordnet sind. Ungenauigkeiten ergeben sich auch aufgrund von Toleranzen in der Messsensorik, zumindest bei der Erfassung des Lenkausschlagwinkels der lenkbaren Achse des Vorderwagens. Das heißt, Fertigungstoleranzen, Verschleiß sowie Mess- und Stellungenauigkeiten sowie Ungenauigkeiten des verwendeten Berechnungsmodells führen in der Summe zu Ungenauigkeiten in Bezug auf den Lenkausschlagwinkel der Räder der vorderen Achse
des Hinterwagens. Das bedeutet weiterhin, dass, wenn beispielsweise der berechnete Lenkausschlagwinkel tatsächlich an den Rädern der lenkbaren Achse des Hinterwagens anliegen würde, bei diesem Wert die Chassis der Fahrzeuge bei Kurvenfahrt, bis auf Schub- und Zugkräfte durch Antrieb und Bremse, kraftlos wären, das heißt also, dass dann der tatsächliche Lenkausschlagwinkel des Hinterwagens mit dem Lenkausschlagwinkel des Vorderwagens genau korreliert. Die Summe der zuvor genannten Ungenauigkeiten kann allerdings zu einem anderen, abweichenden tatsächlichen Lenkausschlagwinkel beim Hinterwagen führen.

Bereits aus der DE 10 2009 017 831 A1 ist in diesem Zusammenhang bei einem mehrachsgelenkten land- oder forstwirtschaftlichen Zugfahrzeug mit einem Anhänger oder Auflieger, der über mindestens eine zwangsgelenkte Achse verfügt, die Ermittlung eines Korrekturwinkels vorgesehen. Hierbei wird davon ausgegangen, dass bei einem Zugfahrzeug, bei dem die vordere Achse und die hintere Achse lenkbar ausgestaltet sind, nicht nur die vordere Achse zur Ermittlung des Lenkausschlagwinkels der lenkbaren Achse des Hinterwagens herangezogen wird, sondern auch noch der Lenkausschlagwinkel der lenkbaren Hinterachse des Zugfahrzeugs, sowie gegebenenfalls der Knickwinkel zwischen Vorder- und Hinterwagen. Beide Lenkausschlagwinkel sowie gegebenenfalls der Knickwinkel zwischen den Fahrzeugen werden miteinander verrechnet und ergeben somit den Lenkausschlagwinkel für die lenkbare Vorderachse des Hinterwagens. Somit steht der Steuerung des Anhängers ein Lenkwinkel zur Verfügung, der ein sach- und bodenschonendes Lenken des Gespanns, insbesondere des Hängers, ermöglicht. Diese Vorgehensweise berücksichtigt allerdings keine Abweichung des tatsächlichen Lenkausschlagwinkels der vorderen Achse des Hinterwagens von einem durch die lenkbare Achse des Vorderwagens vorgegebenen Wert, wenn z. B. Fertigungstoleranzen berücksichtigt werden.

Die der Erfindung zugrunde liegende Aufgabe besteht demzufolge darin, eine Lenkung bereitzustellen, bei deren Verwendung Verspannungen an den Fahrzeugteilen, also Vorderwagen und/oder
Hinterwagen, und/oder ein Spurversatz des mehrteiligen beräderten Landfahrzeuges vermieden werden.

Zur Lösung der Aufgabe dienen die Merkmale des Anspruches 1, sowie ein Verfahren nach dem unabhängigen Anspruch 10. So ist Gegenstand der Erfindung die Lenkung eines Gelenkbusses als mehrteiliges berädertes Landfahrzeug, wobei der Hinterwagen mit dem Vorderwagen durch ein Fahrzeuggelenk gelenkig verbunden ist. Das Fahrzeuggelenk umfasst zwei Gelenksegmente, die durch ein Drehlager schwenkbar miteinander verbunden sind. Der Hinterwagen weist hierbei mindestens zwei Achsen auf, wobei zumindest die Räder der vorderen Achse durch insbesondere eine Achsschenkellenkung lenkbar ausgebildet sind. Die Achsen sind hierbei vorteilhaft beabstandet zueinander angeordnet, der Hinterwagen ist demzufolge vorteilhaft nicht als Tandemachser ausgebildet. Wenn bei Kurvenfahrt des Landfahrzeugs umfassend einen Vorderwagen und mindestens einen Hinterwagen hierbei auf den Vorder- und/ oder Hinterwagen Kräfte und/oder Momente und daraus resultierende Verschiebungen und/oder Verdrehungen und/oder Verspannungen - im Folgenden auch als Größen bezeichnet - an den Fahrzeugteilen auftreten, so sind diese Kräfte und/ oder Momente, sowie die daraus resultierenden Größen, durch Veränderung des Lenkausschlagwinkels der lenkbaren Räder der Vorderachse des Hinterwagens minimierbar. Zur Ermittlung der Kräfte und/oder Momente, Verschiebungen, Verdrehungen und/oder Verspannungen werden Sensoren verwendet. So kann beispielsweise vorgesehen
sein, dass zur Ermittlung der Kräfte und Momente Dehnungsmessstreifen eingesetzt werden. Verschiebungen, Verdrehungen oder Verspannungen können beispielsweise durch Weg- oder Winkelaufnehmer ermittelt werden. Hieraus wird deutlich, dass die Kräfte und Momente auf der einen Seite oder Verschiebungen, Verdrehungen oder Verspannungen auf der anderen Seite jeweils gesondert ermittelt werden können, je nachdem was einfacher zu ermitteln ist.

Das heißt, der Lenkausschlagwinkel der lenkbaren Räder der vorderen Achse des Hinterwagens wird so weit korrigiert, bis die aufgrund der Fehlstellung des tatsächlich zunächst durch die Lenkung vorgegebenen Lenkausschlagwinkels hervorgerufenen und an den Fahrzeugteilen angreifenden Kräfte und/oder Momente minimiert sind.

Vorteilhafte Merkmale und Ausgestaltungen der Erfindung ergeben sich aus den Unteransprüchen.

Nach einer ersten Ausgestaltung der Erfindung wird bei Kurvenfahrt der Lenkausschlagwinkel der Räder der vorderen Achse des Hinterwagens durch den Lenkausschlagwinkel der Räder mindestens einer lenkbaren Achse des Vorderwagens der Lenkung als berechneter Wert vorgegeben, wobei bei Abweichung der tatsächlichen Winkelstellung der Räder der vorderen Achse des Hinterwagens von dem optimalen Wert, die auf Vorder- und/oder Hinterwagen einwirkenden Kräfte und/oder Momente und daraus resultierende Verschiebungen, Verdrehungen und/oder Verspannungen durch Veränderung der Winkelstellung der Räder der vorderen Achse des Hinterwagens durch die Lenkung zur Minimierung verwendbar sind. Unter einer lenkbaren Achse wird eine solche verstanden, bei der die Räder der Achse auslenkbar bzw. um einen bestimmten Winkel verstellbar sind.

Eine zweite Ausgestaltung der Erfindung zeichnet sich dadurch aus, dass bei Kurvenfahrt der Lenkausschlagwinkel der Räder der vorderen Achse des Hinterwagens durch den Winkel zwischen Längsachse des Vorderwagens und der des Hinterwagens, also den Knickwinkel zwischen den beiden Fahrzeugen, der Lenkung als berechneter Wert vorgegeben wird, wobei bei Abweichung der tatsächlichen Winkelstellung der Räder der vorderen Achse des Hinterwagens von dem optimalen Wert, die auf Vorder- und/oder Hinterwagen einwirkenden Kräfte und/oder Momente und daraus resultierende Größen durch Veränderung des Lenkausschlagwinkels der Vorderachse des Hinterwagens durch die Lenkung zur Minimierung verwendbar sind. Die tatsächliche Winkelstellung der vorderen Achse des Hinterwagens kann hierbei dem berechneten Wert entsprechen, er kann allerdings auch davon abweichen, eben wegen beispielsweise ausgeschlagener Achsschenkel.

Der optimale Wert ist insofern ein Wert, bei dem das Fahrzeug oder die Fahrzeugteile einschließlich der gelenkigen Verbindung neben den Kräften und Momenten, die üblicherweise durch Antreiben und Bremsen entstehen, keine zusätzlichen Kräfte und/oder Momente und den daraus resultierenden Verschiebungen, Verdrehungen und/oder Verspannungen, durch die Lenkung erfahren, mithin ausgeschlossen ist, dass die Räder im Extremfall, wenn z. B. die Verspannungen in den Fahrzeugteilen zu groß werden, über den Untergrund radieren.

Der Unterschied zwischen der ersten und der zweiten Ausgestaltung besteht demzufolge darin, dass bei der ersten Ausgestaltung durch die Lenkausschlagwinkel mindestens einer lenkbaren Achse des Vorderwagens der Lenkausschlagwinkel der lenkbaren Achse des Hinterwagens vorgegeben wird, wohingegen bei der zweiten Ausgestaltung von der Winkelstellung der beiden Fahrzeugteile relativ zueinander zur Berechnung des der Lenkung der lenkbaren Achse des Hinterwagens vorzugebenden Wertes ausgegangen wird. Denkbar ist auch eine Kombination der Berücksichtigung von mindestens einem Lenkausschlagwinkel der lenkbaren Achsen des Vorderwagens und Winkelstellung der Fahrzeuge zueinander.

Sind die Räder einer Hinterachse des Hinterwagens lenkbar, so kann auch dieser Lenkwinkel bei der Bestimmung des Lenkwinkels der Räder der Vorderachse des Hinterwagens Berücksichtigung finden.

Vorteilhaft kann vorgesehen sein, dass die Lenkung eine Rechnereinheit umfasst, in der die berechneten Werte des Lenkausschlagwinkels der Räder mindestens einer lenkbaren Achse des Vorderwagens, der Winkelstellung zwischen Vorderwagen und Hinterwagen und/oder des Lenkausschlagwinkels der Räder einer hinteren Achse des Hinterwagens zu einem Korrekturwert verrechenbar sind, wobei der Korrekturwert der Lenkung der Vorderachse des Hinterwagens vorgegeben wird, wobei bei Abweichung der anhand dieses Korrekturwerts eingestellten Winkelstellung der Räder der vorderen Achse des Hinterwagens vom technisch optimalen Korrekturwert, die auf Vorder- und/oder Hinterwagen einwirkenden Kräfte und/oder Momente und daraus resultierende Größen, wie Verschiebungen, Verdrehungen und/oder Verspannungen, durch Veränderung des Lenkausschlagwinkels der Vorderachse des Hinterwagens durch die Lenkung zur Minimierung verwendbar sind.

Nach einem vorteilhaften Merkmal ist des Weiteren vorgesehen, dass zwei Fahrzeugteile eines mehrteiligen beräderten Landfahrzeugs durch ein Fahrzeuggelenk miteinander verbunden sind. Ein solches Fahrzeuggelenk, das insbesondere zwei verschwenkbar miteinander verbundene Gelenksegmente aufweist, die jeweils mit ihren Enden an dem Chassis des Vorder- bzw. Hinterwagens angeordnet sind, besitzen als Kuppelglied zur Verbindung mit dem mindestens einen Fahrzeugteil mindestens ein Metallgummilager. Das heißt, Vorder- und Hinterwagen können durch Metallgummilager mit dem jeweiligen Gelenksegment des Gelenkes verbunden sein. Der Aufbau derartiger Metallgummilager zur Verbindung der Gelenksegmente mit dem Chassis des Vorder- bzw. Hinterwagens ist bekannt. Vorteilhaft ist nach einem Merkmal der Erfindung im Bereich der Metallgummilager mindestens ein Sensor zur Ermittlung einer Kraft und/oder eines Moments bzw. der daraus resultierenden Größen wie Verschiebungen, Verdrehungen und/oder Verspannungen vorgesehen, um dann diese Kräfte und/oder Momente und daraus resultierende Größen durch Veränderung des Lenkausschlagwinkels der Räder der vorderen Achse des Hinterwagens zu minimieren, wie dies bereits an anderer Stelle erläutert worden ist.

Wie bereits ausgeführt, umfasst das Fahrzeuggelenk zwei relativ zueinander verdrehbare Gelenksegmente, wobei das Fahrzeuggelenk eine Messeinrichtung zur Bestimmung der Winkelstellung der beiden Gelenksegmente zueinander aufweist. Das heißt, dass durch eine solche Messeinrichtung, beispielsweise ein sogenannter Drehwinkelgeber, die Stellung der Fahrzeuge in Bezug auf ihre jeweilige Mittellängsachse als gedachte Achsen relativ zueinander bestimmbar ist, und dieser Winkel für die Bestimmung des Lenkausschlagwinkels der lenkbaren Räder der Achse des Hinterwagens dienen kann. Einsetzbar ist eine solche Lenkung sowohl bei Puller- als auch bei Pusherfahrzeugen.

Gegenstand der Erfindung ist ebenfalls ein Gelenkbus als mehrteiliges berädertes Landfahrzeug, mit einer Steuerung oder Regelung für eine Lenkung nach einem der Ansprüche 1 bis 8.

Ebenfalls Gegenstand der Erfindung ist ein Verfahren zur Lenkung eines Hinterwagens eines Gelenkbusses als mehrteiliges, berädertes
Landfahrzeug nach Anspruch 10. Hierbei ist der Hinterwagen mit dem Vorderwagen verbunden ist, wobei der Hinterwagen mindestens zwei beabstandete Achsen aufweist, wobei der Vorderwagen mindestens eine Achse mit lenkbaren Rädern aufweist, wobei zumindest die Räder der vorderen Achse des Hinterwagens lenkbar ausgebildet sind, wobei das Verfahren folgende Schritte umfasst:
- Berechnung des Lenkausschlagwinkels der Räder der vorderen Achse des Hinterwagens auf der Grundlage des Winkels zwischen Vorder- und Hinterwagen, und/oder der Winkelstellung der Räder mindestens einer lenkbaren Achse des Vorderwagens und/oder der Winkelstellung der Räder einer Hinterachse des Hinterwagens;
- Einstellung des Lenkausschlagwinkels der Räder der vorderen Achse des Hinterwagens auf der Grundlage des berechneten Lenkausschlagwinkels;
- Erfassung der auf Vorder- und/oder Hinterwagen einwirkenden Kräfte und/ oder Momente, daraus resultierende Verschiebungen, Verdrehungen und/oder Verspannungen;
- Näherungsweise Minimierung der Kräfte und/oder Momente und/oder Verschiebungen und/oder Verdrehungen und/oder Verspannungen durch Veränderung des Lenkausschlagwinkels der Räder der Vorderachse des Hinterwagens.

Hierbei ist vorgesehen, dass, wenn am Vorderwagen die Räder mehrerer Achsen gelenkt werden, mindestens der Lenkwinkel der Räder zweier Achsen zur Bestimmung des Lenkwinkels der Räder der vorderen Achse des Hinterwagens Berücksichtigung finden kann.

Anhand der Zeichnungen wird die Erfindung nachstehend beispielhaft näher erläutert.
- Fig. 1: zeigt schematisch ein Gelenkfahrzeug;
- Fig. 2: zeigt ein Fahrzeuggelenk mit angedeutetem Vorder- und Hinterwagen;
- Fig. 3: zeigt ein Metallgummilager.

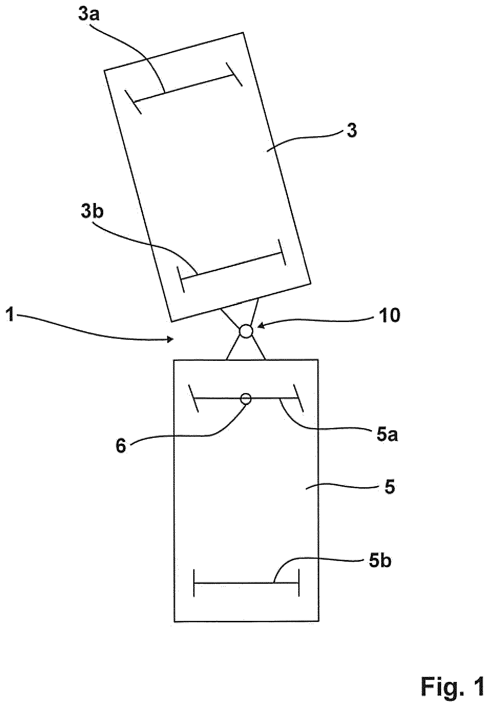

Gemäß Fig. 1 weist das mit 1 bezeichnete Gelenkfahrzeug den Vorderwagen 3 und den Hinterwagen 5 auf. Vorder- und Hinterwagen 3, 5 sind durch das mit 10 bezeichnete Fahrzeuggelenk verbunden. Sowohl der Vorderwagen 3 als auch der Hinterwagen 5 weisen jeweils zwei Achsen 3a, 3b bzw. 5a, 5b auf. Die Räder der vorderen Achse 3a des Vorderwagens 3 sind hierbei lenkbar ausgebildet, wobei gleiches für die Räder der vorderen Achse 5a des Hinterwagens 5 gilt. Die Lenkung der vorderen Achse 5a des Hinterwagens 5 umfasst eine Achsschenkellenkung und ist mit 6 bezeichnet. Die Räder der Hinterachse des Hinterwagens 5 können hierbei ebenfalls lenkbar ausgebildet sein.

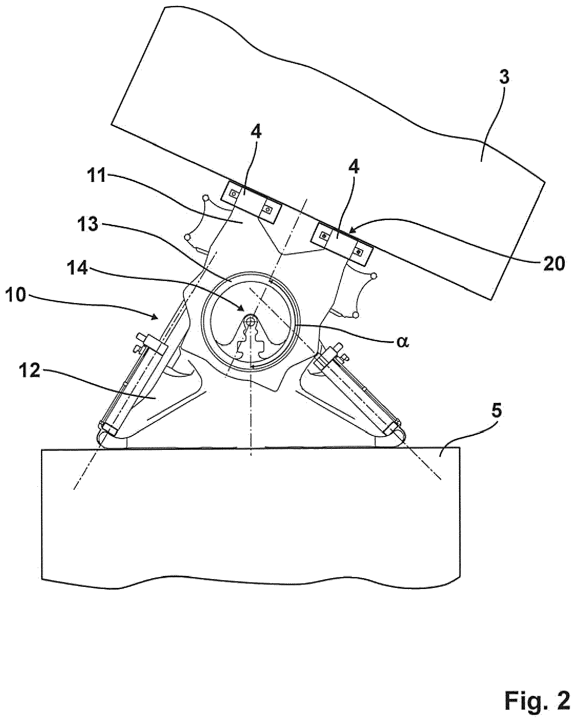

Aus Fig. 2 ergibt sich die Ausgestaltung des Fahrzeuggelenkes 10. Das Fahrzeuggelenk 10 umfasst zwei Gelenksegmente 11, 12, die durch ein Drehlager 13 schwenkbar miteinander verbunden sind. In dem Drehlager 13 ist ein sogenannter Drehwinkelgeber 14 angeordnet, mit dem die Winkelstellung der beiden Gelenksegmente 11, 12 zueinander und damit die Stellung des Vorderwagens zum Hinterwagen ermittelbar ist. Der Drehwinkel ist in Fig. 2 mit α bezeichnet.

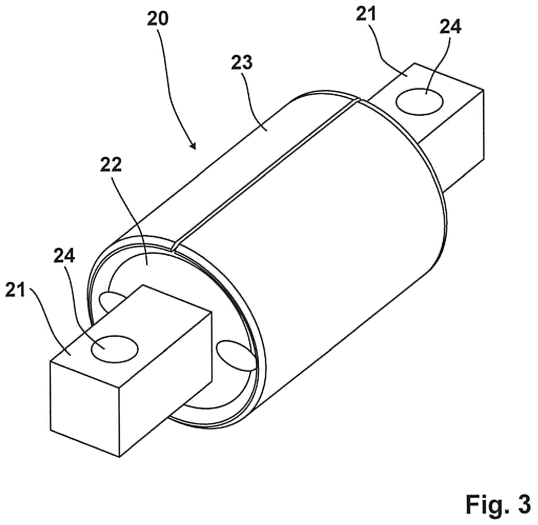

Die Anbindung des Fahrzeuggelenks 10 an den Vorderwagen 3 erfolgt durch zwei Metallgummilager 20. Die Ausgestaltung der beiden Metallgummilager ergibt sich in Anschauung von Fig. 3. Ein solches Metallgummilager umfasst einen Achszapfen 21, der durch ein Elastomerkissen 22 in einer Metallhülse, die ein Gehäuse 23 bildet, unter Vorspannung gelagert ist. Derartige Metallgummilager sind aus dem Stand der Technik hinreichend bekannt. Das Metallgummilager 20 mit dem Gehäuse 23 wird von einer entsprechenden Bohrung in dem Gelenksegment 11 aufgenommen. Der Achszapfen 21 weist an seinem aus dem Gehäuse 23 vorstehenden Enden jeweils eine Bohrung 24 auf, die der Aufnahme jeweils einer Schraube zur Verbindung mit einem am Chassis des Vorderwagens 3 angeordneten Lagerbock 4 dient. Im Bereich des Metallgummilagers, und hier speziell im Metallgummilager selbst, können Sensoren (nicht dargestellt) angeordnet sein, die der Aufnahme von Kräften, Momenten, Verschiebungen, Verdrehungen und/oder Verspannungen dienen. Dies können im Einzelnen beispielsweise Kraftmessdosen, Dehnungsmessstreifen oder auch Weg- oder Winkelsensoren sein.

### Bezugszeichenliste:

- 1: Gelenkfahrzeug
- 3: Vorderwagen
- 3a: vordere Achse
- 3b: hintere Achse
- 4: Lagerbock
- 5: Hinterwagen
- 5a: vordere Achse
- 5b: hintere Achse
- 6: Lenkung (Achsschenkellenkung)
- 10: Fahrzeuggelenk
- 11: Gelenksegment
- 12: Gelenksegment
- 13: Drehlager
- 14: Drehwinkelgeber
- 20: Metallgummilager
- 21: Achszapfen
- 22: Elastomerkissen
- 23: Gehäuse
- 24: Bohrung

## Patentansprüche

1. Gelenkbus als mehrteiliges, berädertes Landfahrzeug, wobei der Hinterwagen (5) mit einem Vorderwagen (3) gelenkig verbunden ist, wobei der Hinterwagen (5) mit dem Vorderwagen (3) durch ein Fahrzeuggelenk (10) verbunden ist, wobei das Fahrzeuggelenk (10) zwei Gelenksegmente (11, 12) umfasst, die durch ein Drehlager schwenkbar miteinander verbunden sind, wobei der Hinterwagen (5) mindestens zwei Achsen (5a, 5b) aufweist, wobei der Hinterwagen (5) eine Lenkung aufweist,
wobei zumindest die Räder der vorderen Achse (5a) des Hinterwagens lenkbar ausgebildet sind,
wobei bei Kurvenfahrt des Gelenkbusses hierbei die auf Vorder- und/oder Hinterwagen (3,5) einwirkenden Kräfte und/oder Momente und daraus resultierende Verschiebungen und/oder Verdrehungen und/oder Verspannungen durch Veränderung des Lenkausschlagwinkels der Räder der Vorderachse (5a) des Hinterwagens (5) minimierbar sind,
wobei zur Ermittlung der Kräfte und/oder Momente, Verschiebungen, Verdrehungen und/oder Verspannungen Sensoren verwendet werden.

2. Gelenkbus nach Anspruch 1,
**dadurch gekennzeichnet,**
**dass** bei Kurvenfahrt der Lenkausschlagwinkel der Räder der vorderen Achse (5a) des Hinterwagens (5) durch den Lenkausschlagwinkel der Räder mindestens einer lenkbaren Achse (3a) des Vorderwagens (3) der Lenkung (6) der Vorderachse des Hinterwagens als berechneter Wert vorgegeben ist, wobei bei Abweichung der tatsächlichen Winkelstellung der Räder der vorderen Achse (5a) des Hinterwagens (5) von dem optimalen Wert, die auf Vorder- und/oder Hinterwagen (3, 5) einwirkenden Kräfte und/oder Momente und daraus resultierende Verschiebungen, Verdrehungen und/oder Verspannungen durch Veränderung der Winkelstellung der Räder der vorderen Achse (5a) des Hinterwagens (5) durch die Lenkung zur Minimierung verwendbar sind.

3. Gelenkbus nach Anspruch 1 oder 2,
**dadurch gekennzeichnet,**
**dass** bei Kurvenfahrt der Lenkausschlagwinkel der Räder der vorderen Achse (5a) des Hinterwagens (5) durch den Winkel zwischen der Längsachse des Vorderwagens (3) und der des Hinterwagens (5) der Lenkung (6) als berechneter Wert vorgegeben wird, wobei bei Abweichung der tatsächlichen Winkelstellung der Räder der vorderen Achse (5a) des Hinterwagens (5) von dem optimalen Wert, die auf Vorder- und/oder Hinterwagen (3, 5) einwirkenden Kräfte und/oder Momente und daraus resultierende Verschiebungen, Verdrehungen und/oder Verspannungen durch Veränderung des Lenkausschlagwinkels der Vorderachse (5a) des Hinterwagens (5) durch die Lenkung (6), zur Minimierung verwendbar sind.

4. Gelenkbus nach einem der voranstehenden Ansprüche,
**dadurch gekennzeichnet,**
**dass** bei Kurvenfahrt der Lenkausschlagwinkel der Räder der vorderen Achse (5a) des Hinterwagens (5) durch den Lenkausschlagwinkel der Räder einer hinteren Achse des Hinterwagens (5) der Lenkung der Vorderachse des Hinterwagens als berechneter Wert vorgegeben wird, wobei die Abweichung der tatsächlichen Winkelstellung der Räder der vorderen Achse (5a) des Hinterwagens (5) vom optimalen Wert, die auf Vorder- und/oder Hinterwagen (3, 5) einwirkenden Kräfte und/oder Momente und daraus resultierende Verschiebungen, Verdrehungen und/ oder Verspannungen durch Veränderung des Lenkauschlagwinkels der Vorderachse (5a) des Hinterwagens (5) durch die Lenkung (6) zur Minimierung verwendbar sind.

5. Gelenkbus nach einem der voranstehenden Ansprüche 2 bis 4, **dadurch gekennzeichnet,**
**dass** die Lenkung (6) eine Rechnereinheit umfasst, in der die berechneten Werte des Lenkausschlagwinkels der Räder mindestens einer lenkbaren Achse des Vorderwagens (3), und/oder der Winkelstellung zwischen Vorderwagen (3) und Hinterwagen (5) und/oder des Lenkausschlagwinkels der Räder einer hinteren Achse des Hinterwagens (5) zu einem Korrekturwert verrechenbar sind, wobei der Korrekturwert der Lenkung der Vorderachse (5a) des Hinterwagens (5) vorgegeben wird, wobei bei Abweichung der anhand dieses Korrekturwertes eingestellten Winkelstellung der Räder der vorderen Achse (5a) des Hinterwagens (5) vom technisch optimalen Korrekturwert, die auf Vorder- und/oder Hinterwagen (3, 5) einwirkenden Kräfte und/oder Momente und daraus resultierende Verschiebungen, Verdrehungen und/oder Verspannungen durch Veränderung des Lenkausschlagwinkels der Vorderachse (5a) des Hinterwagens (5) durch die Lenkung (6) zur Minimierung verwendbar sind.

6. Gelenkbus nach einem der voranstehenden Ansprüche,
**dadurch gekennzeichnet,**
**dass** Vorder- und Hinterwagen (3, 5) eines mehrteiligen, beräderten Gelenkfahrzeuges (1) durch ein Fahrzeuggelenk (10) miteinander verbunden sind.

7. Gelenkbus nach Anspruch 6,
**dadurch gekennzeichnet,**
**dass** das Fahrzeuggelenk (10) durch Metallgummilager (20) mit dem Vorder- und/oder Hinterwagen (3, 5) verbunden ist, wobei im Bereich der Metallgummilager (20) mindestens ein Sensor zur Ermittlung der Kräfte und/oder Momente oder daraus resultierende Verschiebungen, Verdrehungen und/oder Verspannungen angeordnet ist.

8. Gelenkbus nach einem der voranstehenden Ansprüche,
**dadurch gekennzeichnet,**
**dass** das Fahrzeuggelenk (10) zwei relativ zueinander verdrehbare Gelenksegmente (11, 12) umfasst, wobei das Fahrzeuggelenk (10) eine Messeinrichtung zur Bestimmung der Winkelstellung der Gelenksegmente (11, 12) zueinander aufweist.

9. Gelenkbus als mehrteiliges, berädertes Landfahrzeug, mit einer Steuerung oder Regelung für eine Lenkung nach einem oder mehreren der voranstehenden Ansprüche.

10. Verfahren zur Lenkung eines Hinterwagens (5) eines Gelenkbusses als mehrteiliges, berädertes Landfahrzeug, wobei der Hinterwagen (5) mit dem Vorderwagen (3) verbunden ist, wobei der Hinterwagen (5) mindestens zwei Achsen (5a, 5b) aufweist, wobei der Vorderwagen (3) mindestens eine Achse (3a) mit lenkbaren Rädern aufweist, wobei zumindest die Räder der vorderen Achse (5a) des Hinterwagens (5) lenkbar ausgebildet sind, wobei das Verfahren folgende Schritte umfasst:
- Berechnung des Lenkausschlagwinkels der Räder der vorderen Achse (5a) des Hinterwagens (5) auf der Grundlage des Winkels zwischen Vorder- und Hinterwagen (3, 5) und/oder der Winkelstellung der Räder mindestens einer lenkbaren Achse des Vorderwagens (3) und/oder der Winkelstellung der Räder einer Hinterachse des Hinterwagens (5);
- Einstellung des Lenkausschlagwinkels der Räder der vorderen Achse (5a) des Hinterwagens (5) auf der Grundlage des berechneten Lenkausschlagwinkels;
- Erfassung der auf Vorder- und/oder Hinterwagen (3, 5) einwirkenden Kräfte und/oder Momente und daraus resultierender Verschiebungen und/oder Verdrehungen und/oder Verspannungen;
- Näherungsweise Minimierung der Kräfte und/oder Momente, Verschiebungen und/oder Verdrehungen und/oder Verspannungen durch Veränderung des Lenkausschlagwinkels der Räder der Vorderachse (5a) des Hinterwagens (5).

## Claims

1. An articulated bus as a multi-part wheeled land vehicle, wherein the rear carriage (5) is articulately joined with a front carriage (3), wherein the rear carriage (5) is joined with the front carriage (3) by a vehicle joint (10), wherein the vehicle joint (10) comprises two joint segments (11, 12) that are pivotably joined together by way of a pivot bearing, wherein the rear carriage (5) comprises at least two axles (5a, 5b), wherein the rear carriage (5) comprises a steering mechanism, wherein at least the wheels of the front axle (5a) of the rear carriage are designed to be steerable, wherein when the articulated bus drives around a bend, the forces and/or moments and resulting displacements and/or torsions and/or tensions acting on the front and/or rear carriages (3, 5) can be minimized by modifying the steering deflection angle of the wheels of the front axle (5a) of the rear carriage (5),
wherein sensors are used for determining the forces and/or moments, displacements, torsions and/or tensions.

2. The articulated bus according to claim 1,
**characterized in that**
when driving around a bend, the steering deflection angle of the wheels of the front axle (5a) of the rear carriage (5) is provided to the steering mechanism (6) of the front axle of the rear carriage as a value calculated based on the steering deflection angle of the wheels of at least one steerable axle (3a) of the front carriage (3), wherein in case of a deviation of the actual angular position of the wheels of the front axle (5a) of the rear carriage (5) from the optimal value, the forces and/or moments and the resulting displacements, torsions and/or tensions acting on the front and/or rear carriage (3, 5) can be used by the steering mechanism for minimization by modifying the angular position of the wheels of the front axle (5a) of the rear carriage (5).

3. The articulated bus according to claim 1 or 2,
**characterized in that**
when driving around a bend, the steering deflection angle of the wheels of the front axle (5a) of the rear carriage (5) is provided to the steering mechanism (6) as a value calculated based on the angle between the longitudinal axis of the front carriage (3) and that of the rear carriage (5), wherein, in case of a deviation of the actual angular position of the wheels of the front axle (5a) of the rear carriage (5) from the optimal value, the forces and/or moments and the resulting displacements, torsions and/or tensions acting on the front and/or rear carriage (3, 5) can be used by the steering mechanism (6) for minimization by modifying the steering deflection angle of the front axle (5a) of the rear carriage (5).

4. The articulated bus according to one of the afore-mentioned claims,
**characterized in that**
when driving around a bend, the steering deflection angle of the wheels of the front axle (5a) of the rear carriage (5) is provided to the steering mechanism of the front axle of the rear carriage as a value calculated based on the steering deflection angle of the wheels of a rear axle of the rear carriage (5), wherein, in case of a deviation of the actual angular position of the wheels of the front axle (5a) of the rear carriage (5) from the optimal value, the forces and/or moments and the resulting displacements, torsions and/or tensions acting on the front and/or rear carriage (3, 5) can be used by the steering mechanism (6) for minimization by modifying the steering deflection angle of the front axle (5a) of the rear carriage (5).

5. The articulated bus according to one of the afore-mentioned claims 2 to 4,
**characterized in that**
the steering mechanism (6) comprises a computer unit, in which the calculated values of the steering deflection angle of the wheels of at least one steerable axle of the front carriage (3), and/or of the angular positions of the front carriage (3) and the rear carriage (5) and/or of the steering deflection angle of the wheels of a rear axle of the rear carriage (5) can be used for calculating a correction value, wherein the correction value is provided to the steering mechanism of the front axle (5a) of the rear carriage (5), wherein in case of a deviation of the angular position of the wheels of the front axle (5a) of the rear carriage (5), which has been set based on this correction value, from the technically optimal correction value, the forces and/or moments and resulting displacements, torsions and/or tensions acting on the front and/or rear carriages (3, 5) can be used by the steering mechanism (6) for minimization by modifying the steering deflection angle of the front axle (5a) of the rear carriage (5).

6. The articulated bus according to one of the afore-mentioned claims,
**characterized in that**
the front and rear carriage (3, 5) of a multi-part wheeled land vehicle (1) are joined by a vehicle joint (10).

7. The articulated bus according to claim 6,
**characterized in that**
the vehicle joint (10) is connected to the front and/or rear carriage (3, 5) by metal rubber bearings (20), wherein at least one sensor for detecting the forces and/or moments and the resulting displacements, torsions and/or tensions is disposed in the area of the metal rubber bearing (20).

8. The articulated bus according to one of the afore-mentioned claims,
**characterized in that**
the vehicle joint (10) comprises two joint segments (11, 12) that are pivotable relative to each other, wherein the vehicle joint (10) comprises a measuring device for determining the angular position of the joint segments (11, 12) relative to each other.

9. An articulated bus as a multi-part wheeled land vehicle, with a control or regulation system for a steering mechanism according to one or several of the afore-mentioned claims.

10. A method for steering a rear carriage (5) of an articulated bus as a multi-part wheeled land vehicle, wherein the rear carriage (5) is joined with the front carriage (3), wherein the rear carriage (5) comprises at least two axles (5a, 5b), wherein the front carriage (3) comprises at least one axle (3a) with steerable wheels, wherein at least the wheels of the front axle (5a) of the rear carriage (5) are designed to be steerable, wherein the method comprises the following steps:
- calculating the steering deflection angle of the wheels of the front axle (5a) of the rear carriage (5) based on the angle between the front and the rear carriage (3, 5) and/or on the angular position of the wheels of at least one steerable axle of the front carriage (3) and/or on the angular position of the wheels of a rear axle of the rear carriage (5);
- adjusting the steering deflection angle of the wheels of the front axle (5a) of the rear carriage (5) based on the calculated steering deflection angle;
- detecting the forces and/or moments and the resulting displacements and/or torsions and/or tensions acting on the front and/or rear carriage (3,5);
- approximately minimizing the forces and/or moments, displacements and/or torsions and/or tensions by modifying the steering deflection angle of the wheels of the front axle (5a) of the rear vehicle (5).

## Revendications

1. Autobus articulé en tant que véhicule terrestre à roues en plusieurs parties, où le véhicule arrière (5) est relié de manière articulée à un véhicule avant (3), où le véhicule arrière (5) est relié au véhicule avant (3) par une articulation de véhicule (10), où l'articulation de véhicule (10) comprend deux segments d'articulation (11, 12) qui sont reliés entre eux de manière pivotante par un palier de pivotement, où le véhicule arrière (5) présente au moins deux essieux (5a, 5b), où le véhicule arrière (5) présente un système de direction,
où au moins les roues de l'essieu avant (5a) du véhicule arrière sont conçues pour être directrices,
où
en cas de virage de l'autobus articulé, les forces et/ou les moments agissant sur les véhicules avant et/ou arrière (3, 5) et les déplacements et/ou les torsions et/ou les tensions qui en résultent peuvent être minimisés en modifiant l'angle de braquage des roues de l'essieu avant (5a) du véhicule arrière (5),
où des capteurs sont utilisés pour déterminer les forces et/ou les moments, les déplacements, les torsions et/ou les tensions.

2. Autobus articulé selon la revendication 1,
**caractérisé en ce que**
dans les virages, l'angle de braquage des roues de l'essieu avant (5a) du véhicule arrière (5) est fourni au système de direction (6) de l'essieu avant du véhicule arrière sous forme de valeur calculée à partir de l'angle de braquage des roues d'au moins un essieu directeur (3a) du véhicule avant (3), où en cas de déviation de la position angulaire réelle des roues de l'essieu avant (5a) du véhicule arrière (5) de la valeur optimale, les forces et/ou les moments agissant sur les véhicules avant et/ou arrière (3, 5) et les déplacements, les torsions et/ou les tensions qui en résultent peuvent être utilisés pour la minimisation par modification de la position angulaire des roues de l'essieu avant (5a) du véhicule arrière (5) par le système de direction.

3. Autobus articulé selon la revendication 1 ou 2,
**caractérisé en ce que**
dans les virages, l'angle de braquage des roues de l'essieu avant (5a) du véhicule arrière (5) est fourni au système de direction (6) sous forme de valeur calculée à partir de l'angle entre l'axe longitudinal du véhicule avant (3) et celui du véhicule arrière (5), où, en cas de déviation de la position angulaire réelle des roues de l'essieu avant (5a) du véhicule arrière (5) de la valeur optimale, les forces et/ou les moments agissant sur les véhicules avant et/ou arrière (3, 5) et les déplacements, les torsions et/ou les tensions qui en résultent peuvent être utilisés pour la minimisation par modification de l'angle de braquage de l'essieu avant (5a) du véhicule arrière (5) par le système de direction (6).

4. Autobus articulé selon l'une des revendications précédentes,
**caractérisé en ce que**
dans les virages, l'angle de braquage des roues de l'essieu avant (5a) du véhicule arrière (5) est fourni au système de direction de l'essieu avant du véhicule arrière sous forme de valeur calculée à partir de l'angle de braquage des roues d'un essieu arrière du véhicule arrière (5), où en cas de déviation de la position angulaire réelle des roues de l'essieu avant (5a) du véhicule arrière (5) de la valeur optimale, les forces et/ou moments agissant sur le véhicule avant et/ou arrière (3, 5) et les déplacements, torsions et/ou tensions qui en résultent peuvent être utilisés pour la minimisation par modification de l'angle de braquage de l'essieu avant (5a) du véhicule arrière (5) par le système de direction (6).

5. Autobus articulé selon l'une des revendications précédentes 2 à 4,
**caractérisé en ce que**
le système de direction (6) comprend une unité de calcul dans laquelle les valeurs calculées de l'angle de braquage des roues d'au moins un essieu directeur du véhicule avant (3) et/ou la position angulaire entre le véhicule avant (3) et le véhicule arrière (5) et/ou l'angle de braquage des roues d'un essieu arrière du véhicule arrière (5) peuvent être calculée pour former une valeur de correction, où la valeur de correction est fournie au système de direction de l'essieu avant (5a) du véhicule arrière (5), où, en cas de déviation de la position angulaire des roues de l'essieu avant (5a) du véhicule arrière (5), réglée sur la base de cette valeur de correction, de la valeur de correction techniquement optimale, les forces et/ou moments agissant sur le véhicule avant et/ou arrière (3, 5) et les déplacements, torsions et/ou tensions qui en résultent peuvent être utilisés pour la minimisation par modification de l'angle de braquage de l'essieu avant (5a) du véhicule arrière (5) par le système de direction (6).

6. Autobus articulé selon l'une des revendications précédentes,
**caractérisé en ce que**
les voitures avant et arrière (3, 5) d'un véhicule articulé à roues (1) en plusieurs parties sont reliées entre elles par une articulation de véhicule (10).

7. Autobus articulé selon la revendication 6,
**caractérisé en ce que**
l'articulation de véhicule (10) est reliée au véhicule avant et/ou arrière (3, 5) par des paliers en caoutchouc métallique (20), au moins un capteur pour déterminer les forces et/ou les moments ou les déplacements, les torsions et/ou les tensions qui en résultent étant disposé dans la région des paliers en caoutchouc métallique (20).

8. Autobus articulé selon l'une des revendications précédentes,
**caractérisé en ce que**
l'articulation de véhicule (10) comprend deux segments d'articulation (11, 12) pouvant pivoter l'un par rapport à l'autre, l'articulation de véhicule (10) présentant un dispositif de mesure pour déterminer la position angulaire des segments d'articulation (11, 12) l'un par rapport à l'autre.

9. Autobus articulé, en tant que véhicule terrestre à roues en plusieurs parties, avec un système de commande ou de régulation pour un système de direction selon une ou plusieurs des revendications précédentes.

10. Procédé pour diriger un véhicule arrière (5) d'un autobus articulé en tant que véhicule terrestre à roues en plusieurs parties, où le véhicule arrière (5) est relié au véhicule avant (3), où le véhicule arrière (5) présente au moins deux essieux (5a, 5b), où le véhicule avant (3) présente au moins un essieu (3a) avec des roues directrices, où au moins les roues de l'essieu avant (5a) du véhicule arrière (5) sont conçues pour être directrices, où le procédé comprend les étapes suivantes :
- calcul de l'angle de braquage des roues de l'essieu avant (5a) du véhicule arrière (5) sur la base de l'angle entre les véhicules avant et arrière (3, 5) et/ou de la position angulaire des roues d'au moins un essieu directeur du véhicule avant (3) et/ou de la position angulaire des roues d'un essieu arrière du véhicule arrière (5) ;
- réglage de l'angle de braquage des roues de l'essieu avant (5a) du véhicule arrière (5) sur la base de l'angle de braquage calculé ;
- détection des forces et/ou des moments agissant sur le véhicule avant et/ou arrière (3, 5) et des déplacements et/ou des torsions et/ou des tensions qui en résultent ;
- minimisation approximative des forces et/ou moments, des déplacements et/ou des torsions et/ou des tensions en modifiant l'angle de braquage des roues de l'essieu avant (5a) du véhicule arrière (5).
